# EUROPÄISCHE PATENTSCHRIFT

(11) **EP 3 888 431 B1**
(45) Veröffentlichungstag und Bekanntmachung des Hinweises auf die Patenterteilung: **01.05.2024**
(21) Anmeldenummer: 21165287.0
(22) Anmeldetag: 26.03.2021
(51) Int. Cl.: A01B 61/00, A01B 63/24

(54) **BODENBEARBEITUNGSEINHEIT UND LANDWIRTSCHAFTLICHES ARBEITSGERÄT**
SOIL WORKING UNIT AND AGRICULTURAL IMPLEMENT
UNITÉ DE TRAITEMENT DU SOL ET APPAREIL DE TRAVAIL AGRICOLE

(30) Priorität: 31.03.2020 DE 202020101749 U
(43) Veröffentlichungstag der Anmeldung: 06.10.2021
(73) Patentinhaber: Grimme Landmaschinenfabrik GmbH & Co. KG, 49401 Damme (DE)
(72) Erfinder: Böging, Michael, 49424 Goldenstedt/Lutten (DE)
(74) Vertreter: Wischmeyer, André

(56) Entgegenhaltungen:
- EP-A1- 0 876 748
- WO-A1-97/16061
- ES-A6- 2 006 536
- US-A- 5 605 196
- US-A1- 2011 120 357

## Beschreibung

Die vorliegende Erfindung betrifft eine Bodenbearbeitungseinheit, insbesondere zur Dammformung, mit einem Bodenbearbeitungselement, das einen insbesondere eine Spitze aufweisenden Frontteil und wenigstens einen sich daran anschließenden seitlichen Leitbereich aufweist und welches insbesondere als Dammform- oder Häufelelement ausgebildet ist, sowie mit zwei Lenkern und einem als Gestell ausgebildeten Tragrahmen, an dem das Bodenbearbeitungselement mittels der Lenker gelenkig angebunden ist.

Aus der EP 2 158 800 B1 ist ein Gegenstand nach dem Oberbegriff des Anspruchs 1 bekannt. Die dort dargestellte und in ein landwirtschaftliches Arbeitsgerät integrierte Bodenbearbeitungseinheit weist ein Bodenbearbeitungselement auf, das über eine Parallelogrammführung gelenkig am Gestellt angebunden ist. Mittels eines Dämpfungselements wird das Viergelenk in einer bevorzugten Lage gehalten. Sofern der mittels des Gestells über die Lenker gezogene Frontteil im Boden gegen einen Widerstand läuft, beispielsweise einen Stein, wird je nach der auf die Spitze des Frontteils ausgeübten Kraft das Bodenbearbeitungselement nach hinten und oben ausgelenkt, wobei das Dämpfungselement komprimiert wird. Je weiter das Bodenbearbeitungselement ausgelenkt wird, desto größer wird die auf die Spitze wirkende Kraft. WO 9716061 offenbart eine weitere gattumgsgemäße Maschine.

Es ist Aufgabe der vorliegenden Erfindung, eine Bodenbearbeitungseinheit dergestalt auszubilden, dass sie einerseits eine stabile Lage im Boden behält, andererseits relevanten Hindernissen möglichst beschädigungsfrei ausweichen kann.

Die Aufgabe wird gelöst durch einen Gegenstand gemäß Anspruch 1 sowie durch einen Gegenstand nach Anspruch 15. Vorteilhafte Ausgestaltungen der Erfindung sind den auf diese Ansprüche rückbezogenen Unteransprüchen sowie der nachfolgenden Beschreibung zu entnehmen.

Erfindungsgemäß ist vorgesehen, dass die Lenker zumindest für eine Bewegung aus einer ersten Betriebsposition, in der zumindest einer der Lenker und vorzugsweise beide Lenker vom Gestell aus nach vorne weisen, in eine zweite Betriebsposition unterschiedlich lang ausgebildet sind. Zunächst werden während der Bewegung von zumindest Teilen des Bodenbearbeitungselements durch den Boden die auf das Bodenbearbeitungselement ausgeübten Kräfte durch den zumindest einen nach vorne weisenden Lenker nach hinten in das Gestell abgeleitet, bzw. das Bodenbearbeitungselement wird durch den Boden geschoben. Insbesondere ist das Bodenbearbeitungselement so ausgebildet, dass der Schwerpunkt der vom Boden ausgeübten Kräfte und insbesondere eine etwaige Spitze des Bodenbearbeitungsgeräts unterhalb eines in Bewegungsrichtung vor dem Bodenbearbeitungselement befindlichen Momentanpols angeordnet sind.

Durch ein im Boden liegendes Hindernis, welches eine zu große Kraft auf das Bodenbearbeitungselement ausübt, wird eine Schwenkbewegung indiziert, die mit einem Anheben des in Bewegungs- bzw. Fahrtrichtung hinteren Teils des Bodenbearbeitungselements einhergeht. Zumindest einer der Lenker verschwenkt bezogen auf eine Horizontale nach oben. Es ergibt sich eine im Verlauf der Schwenkbewegung abnehmende Ausweichkraft. Die Ausweichkraft ist diejenige Kraft, die auf das Bodenbearbeitungselement, insbesondere dessen Spitze bzw. Frontteil eingebracht werden muss, um eine Ausweichbewegung bzw. Verschwenkung zu bewirken.

Durch die unterschiedliche Länge der Lenker ergibt sich eine Überlagerung einer Drehung oder Verschwenkung des Bodenbearbeitungselements und dessen Translation, wobei das Bodenbearbeitungselement mit seiner Spitze auf einer definierten Bahn verläuft, die sich in der ersten Bewegungsphase nur wenig ändert und in der zweiten Bewegungs- und Ausweichphase dann entsprechend schneller. Insbesondere können die Lenkerlängen und/oder die Lager bzw. Lagerpunkte des zumindest als Viergelenk ausgebildeten Mehrgelenks dergestalt ausgelegt werden, dass sich in der ersten bzw. einer Ausgangs-Betriebsposition im Arbeitspunkt und um diesen herum bei einer nur geringeren Höhenänderung des Frontteils oder dessen Spitze (< 10 oder < 15 mm) eine annähernd konstante Ausweichkraft (< 10 % Unterschied) ergibt und diese erste bei einer weiteren Entfernung von der ersten Betriebsposition, beispielsweise bei einer Höhenänderung der Scharspitze um z.B. entsprechend mehr als 10 mm oder mehr als 15 mm die Ausweichkraft geringer wird. Hierdurch wird ein besonders stabiler Lauf im Boden erreicht und erst dann, wenn relevante Hindernisse eine Beschädigung des Frontteils bzw. des Bodenbearbeitungselements erwarten lassen, dieses ausweicht.

Ein Lenker ist dann als nach vorne weisend zu bezeichnen, wenn in einer Richtung quer zur Hauptfahrt- bzw. -bewegungsrichtung der Bodenbearbeitungseinheit und von links betrachtet eine Linie zwischen den jeweiligen Lagerpunkten eines Lenkers in einem Koordinatensystem, in dem die gestellseitige Lagerposition auf der Y-Achse angeordnet ist, der weitere Lagerpunkt des Lenkers im zweiten und/oder dritten Quadranten bzw. zwischen diesen beiden Quadranten angeordnet ist.

Insbesondere bildet der Frontteil des Bodenbearbeitungselements eine Spitze aus, wenn ebenfalls wiederum in einer Ansicht quer zur Fahrt- bzw. Hauptfahrtrichtung betrachtet das Bodenbearbeitungselement in einer Spitze ausläuft. Der Frontteil kann mit dem sich hieran anschließenden seitlichen Leitbereich einstückig ausgebildet sein. Es kann sich bei den Leitbereichen auch um ein oder mehrere an den Frontteil anschließende einzelne Bleche oder andere ausreichend harte Formteile handeln, die gemeinsam mit dem Frontteil auf einem Rahmen des Bodenbearbeitungselements befestigt sind. Die Lenker können bodenbearbeitungselementseitig an diesem Rahmen, an dem Frontteil oder etwaigen weiteren Blechen befestigt sein.

Die Leitbereiche dienen in ihrer Ausbildung als Dammform- oder Häufelelement der Ausbildung einer Dammform. Insofern kann dann die Bodenbearbeitungseinheit auch als Dammformer bezeichnet werden.

Hierzu kann die Bodenbearbeitungseinheit mit einem oder mehreren weiteren Elementen zusammenwirken, die beispielsweise gestellseitig angeordnet sind, jedoch nicht mit dem Bodenbearbeitungselement verbunden sind. Es kann sich jedoch alternativ oder ergänzend auch um gemäß der EP 2158800 B1 an dem Rahmen des Bodenbearbeitungselements angeordnete weitere Dammformelemente handeln.

Insbesondere sind die Leitbereiche in Form von Leitblechen oder Leitformteilen links und rechts an den Frontteil nach hinten und oben von dem Frontteil wegführend mit einer gebogenen Kontur versehen, die eine typische Dammformer-Kontur mit nach oben und hinten auskragenden Kanten aufweist.

Insbesondere sind die beiden Lenker dergestalt gelagert, dass ausgehend von der ersten Betriebsposition durch die Verschwenkung der beiden Lenker und die Bewegung der bodenbearbeitungselementseitigen Lagerpunkte in einer Seitenansicht betrachtet, quer zur Bewegungsrichtung, zwei sich nach oben hin zunächst voneinander entfernende Kreissegmente ausgebildet werden. Durch die feste Beabstandung der bodenbearbeitungselementseitigen Lagerpunkte, die jeweils auf einem der beiden Kreissegmente verfahren bzw. verschwenken, verschwenkt entsprechend das Bodenbearbeitungselement, wobei es in Bewegungsrichtung von links betrachtet gegen den Uhrzeigersinn verschwenkt bzw. in Fahrtrichtung von rechts betrachtet mit dem Uhrzeigersinn verschwenkt. Der Abstand wird insbesondere dann größer, wenn sich die Kreissegmente bei Überstreichen gleicher Winkel voneinander entfernen. Es versteht sich, dass eine Bewegung des Bodenbearbeitungselements in Form einer Translation relativ zum Gestell zu betrachten ist. Eine Drehung oder Verschwenkung des Bodenbearbeitungselements ist insbesondere in einer Ansicht quer zur Bewegungsrichtung zu betrachten.

Eine vorteilhafte Verschwenkung und Aufteilung der Ausweichkräfte ist insbesondere dann gegeben, wenn der Lagerabstand bzw. Lagerpunktabstand der beiden Lenker bodenbearbeitungselementseitig kleiner ist als der gestellseitige Lagerabstand bzw. Lagerpunktabstand der beiden Lenker. Insbesondere ist das Verhältnis des bodenbearbeitungselementseitigen Lagerabstands zum gestellseitigen Lagerabstand in einem Bereich von einschließlich 0,4 bis einschließlich 0,7. Der Lagerabstand ist hierbei der Abstand der Lagerpunkte oder -achsen auf Seiten des Bodenbearbeitungselements bzw. des Gestells der Bodenbearbeitungseinheit.

Vorteilhafterweise weist eine erfindungsgemäße Bodenbearbeitungseinheit einen Momentanpol auf, der sich betrachtet quer zur Fahrtrichtung durch zwei gerade Linien ergibt, die vom gestellseitigen Lagerpunkt eines jeweiligen Lenkers ausgehen, dann durch den bodenbearbeitungselementseitigen Lagerpunkt eines jeweiligen Lenkers verlaufen und sich in Fahrtrichtung weiter nach vorne schneiden. Dieser Momentanpol wandert im Verlauf einer Bewegung des Bodenbearbeitungselements, ausgelöst durch ein Hindernis im Boden auf einer vorzugsweise vor dem Bodenbearbeitungselement liegenden, nach oben verlaufenden Kurve.

Gemäß einer weiteren vorteilhaften Ausführung der Erfindung liegt die Länge des oberen Lenkers zu der Länge des unteren Lenkers in einem Bereich von 0,8 bis 1,3, vorzugsweise von 0,9 bis 1,2. Durch umfangreiche Versuche hat sich dieser Bereich genauso wie der Bereich der Lagerabstände der beiden Lenker im Falle eines Viergelenks als derjenige Bereich ergeben, in dem die die Bewegung des Bodenbearbeitungselement besonders vorteilhaft mit einer zunächst nahezu konstanten und dann abnehmenden Ausweichkraft einhergeht.

Gemäß einem weiteren erfindungsgemäßen Ausführungsbeispiel ist die Bodenbearbeitungseinheit dergestalt ausgelegt, dass ein vorderster Punkt des Frontteils, betrachtet wiederum in einer Ansicht quer zur Fahrt- oder Bewegungsrichtung, insbesondere die Spitze, einen horizontalen Abstand zum unteren bzw. nächsten Lagerpunkt des Bodenbearbeitungselements von -100 mm bis 500 mm bezogen auf eine horizontale Ebene bzw. den horizontalen Untergrund aufweist. "-100 mm" bedeutet dann in gegen die Fahrtrichtung um 100 mm nach hinten versetzt. Der Lagerpunkt ist hierbei oberhalb der Spitze angeordnet. Innerhalb dieses Bereiches kommt es insbesondere in Verbindung mit den Längenverhältnissen der Lenker zur vorteilhaften Ausbildung der Bewegungs- und Kraftverläufe.

Die Fahrt- oder Bewegungsrichtung ist diejenige Richtung, in die die Bodenbearbeitungseinheit während des Betriebs hauptsächlich bewegt wird. In Richtung der Schwenkachse eines Lagers betrachtet ist der Lagerpunkt derjenige Punkt des Lagers, durch den die Schwenkachse verläuft.

Vorteilhafterweise ist eine erfindungsgemäßes Bodenbearbeitungseinheit mit zumindest einem Vorspannelement versehen, welches insbesondere zwischen zwei relativ zueinander beweglichen Teilen der Bodenbearbeitungseinheit angeordnet ist und diese insbesondere unter Ausübung einer Kraft miteinander verbindet. Insbesondere dient das Vorspannelement dazu, insbesondere in einem Zustand, der frei von äußeren Krafteinflüssen ist, das Bodenbearbeitungselement mittels des durch das Vorspannelements erzeugten Drehmoments in eine Ausgangsstellung zurück zu führen. Dieses Vorspannelement ist insbesondere dergestalt ausgelegt, dass erst ab einer bestimmten Kraft von z.B. 350 kg, die durch die Bewegung durch den Boden erzeugt wird, auf das Bodenbearbeitungselement eine wesentliche Bewegung, d.h. eine Verschwenkung aus der anfänglichen ersten Betriebsposition erfolgt. Sofern die auf das Bodenbearbeitungselement wirkenden Kräfte wieder geringer werden, überführt das Vorspannelement das Bodenbearbeitungselement wieder in seine Ausgangsstellung.

Vorteilhafterweise ist das Vorspannelement einenends gestellfest und anderenends an einem Lenker oder auf Seiten des Bodenbearbeitungselements angeordnet. Insbesondere ist die Kinematik des Mehrgelenks dergestalt ausgelegt, dass die Ausweichkraft, d.h. die Kraft zur Bewegung des Bodenbearbeitungselement aus seiner ersten Position, zunächst annähernd konstant ist, bis die beiden Lenker in eine Position verschwenkt sind, in der trotz einer verstärkten Auslenkung oder Komprimierung des Vorspannelements durch die Hebelverhältnisse bereits eine geringere Kraft ausreicht, um eine weitere Verschwenkung zu bewirken. Dies ist insbesondere für unterschiedliche erste Betriebspositionen hilfreich, die beispielsweise bei Bodenbearbeitungselementen mit unterschiedlich ausgeformten Leitbereichen oder unterschiedlichen Lagerpositionen einhergehen. Eine Abnahme der Ausweichkraft ergibt sich beispielsweise bei einer Ausbildung des Vorspannelements als Feder dann, wenn die Änderung einer Federkraft, die sich aufgrund einer durch eine Verschwenkung des Bodenbearbeitungselements bewirkten Auslenkung oder Komprimierung der Feder ergibt, durch die Änderung der mit der Verschwenkung einhergehenden Hebelverhältnisse zwischen Feder, Gestell und Lenkern und/oder Bodenbearbeitungselement "überkompensiert". Durch andere, für die Wirkung der Federkraft auf die weiteren Elemente der Bodenbearbeitungseinheit "schlechtere" Hebelverhältnisse wird die effektiv ausgeübte Vorspannkraft geringer.

Die Vorspannkraft ist insbesondere in einem Bereich annähernd identisch, in dem die Spitze des Frontteils ausgehend von einer ersten Betriebsposition maximal 15 mm, vorzugsweise maximal 10 mm, bezüglich einer Horizontalen zum Untergrund nach oben oder nach unten bewegt ist, während beispielsweise ein hinterer Teil des Bodenbearbeitungselements umfassend hintere Kanten der seitlichen Leitbereiche eine deutlich größere Verschwenkung erfahren können.

Das Vorspannelement kann als Druck- oder Zugelement ausgebildet sein. Es können insbesondere zwei parallel zueinander verlaufende Vorspannelemente verwendet werden, die beispielsweise links und rechts in von der Seite betrachtet identischen Lagerpunkten befestigt sind.

Vorzugsweise ist das zumindest eine Vorspannelement einenends an einem oberen Lenker und andererseits an dem Gestell unterhalb des Lenkers (Zugelement) oder oberhalb des Lenkers (Druckelement) angeordnet. Bezüglich der Höhe über dem Untergrund bzw. einer horizontalen Ebene ist das Vorspannelement in einer Ausbildung als Zugelement insbesondere einenends zwischen den gestellseitigen Lagerpunkten der Lenker angeordnet. In letzterer Variante werden insbesondere die vorliegenden Bauräume gut ausgenutzt.

Insbesondere sind die Lenker dergestalt am Bodenbearbeitungselement angeordnet, dass dieses im Betriebsfall eine erste Bewegungsphase mit im Wesentlichen einer Verschenkung aus der ersten Betriebsposition mit nur geringfügigem Höhenversetzen der Spitze und eine anschließende zweite Bewegungsphase mit im Wesentlichen einer Translation des gesamten Bearbeitungselements aufweist bzw. durchläuft.

"Im Wesentlichen eine Verschwenkung" liegt dann vor, wenn ebenfalls wieder quer zur Bewegungsrichtung betrachtet eine Bewegung eines in Fahrtrichtung nach hinten weisenden Endes des Bodenbearbeitungselements eine deutlich größere Strecke überstreicht als das in Fahrtrichtung vordere bzw. entgegengesetzte Ende des Bodenbearbeitungselements. Insbesondere ist die überstrichene Strecke vom rückseitigen Ende ein x-faches der Bewegung des vorderen Endes, wobei x ≥ 3 ist.

In der Translationsphase des Bearbeitungselements sind die Unterschiede der von dem vordersten und rückseitigen Ende überstrichene Bereiche des Bodenbearbeitungselements dann ähnlicher. Die Unterschiede sind dann hinsichtlich der überstrichenen Strecke < 3.

Insbesondere ist in der ersten Bewegungsphase die Ausweichkraft im Wesentlichen identisch und beträgt die bereits erwähnten 350 kg +/- 50 kg. Diese Größe ist für eine Vielzahl der insbesondere bei Legemaschinen verwendeten Bodenbearbeitungseinheiten ausreichend und deckt die über verschiedene Bodenverhältnisse bekannten notwendigen Ausweichkräfte der ersten Betriebsposition gut ab.

Die Ausweichkraft in der zweiten Bewegungsphase nimmt dann gemäß einer erfindungsgemäßen Weiterbildung mit zunehmender Auslenkung der Lenker weiter ab.

Anstelle eines Viergelenksystems kann es sich bei der Anbindung des Bodenbearbeitungselements auch um ein Mehrgelenk mit mehr als vier Lenkern handeln.

Zwecks Vermeidung eines zu tiefen Eindringens aus einer ersten Betriebsposition in den Boden ist vorzugsweise ein Blockadeelement vorgesehen, welches einenends an einem der Lenker und/oder an dem Bodenbearbeitungselement und anderenends am Gestell angeordnet ist. Insbesondere ist es bezüglich der Höhe oberhalb der Lenker am Tragrahmen angeordnet, wobei eine Bewegung in eine Richtung nach unten begrenzt und eine Richtung nach oben erlaubt ist. Hierbei kann es sich beispielsweise um eine Kette oder um eine Gelenkstange handeln, die zur Vermeidung einer Totpunktstellung mit zwei gegeneinander angewinkelten Gelenkstangenteilen ausgebildet ist. Alternativ kann es sich auch um einen Anschlag für zumindest einen der Lenker handeln, der eine Bewegung des Lenkers nach unten blockiert.

Um gleichwohl zu starke Kräfte in Richtung eines Untergrundes dämpfen zu können, ist die Anbindung des Blockadeelements am Gestell vorzugsweise gedämpft ausgebildet, beispielsweise durch ein aus Kunststoff ausgebildetes Dämpfungselement.

Vorteilhafterweise ist die Länge des Blockadeelements und/oder der Lagerpunkt des Blockadeelements am Gestell z.B. mittels einer Augenschraube variierbar ausgebildet, um insbesondere eine Nullposition des Bodenbearbeitungselements und/oder dessen Dämpfung zu variieren. Entsprechend kann durch die Verstellung des Lagers des Blockadeelements das Bodenbearbeitungselement hinsichtlich der rückwärtigen, oberen Kante höhenvariabel ausgebildet sein.

Vorteilhafterweise weist eine erfindungsgemäße Bodenbearbeitungseinheit wenigstens ein Stellmittel auf, durch das wenigstens eines der gestell- oder bodenbearbeitungselementseitigen Lager lageveränderlich ist. So kann beispielsweise das Lager eines Lenkers an einer verschiebbaren Stange des Gestells angebunden sein.

Vorzugsweise ist das Stellmittel dergestalt ausgebildet, dass das gestell- oder bodenbearbeitungselementseitige Lager in einer Seitenansicht nach vorne oder nach hinten verschoben werden kann, so dass hierdurch eine rückwärtige, obere Kante des Leitbereichs bezüglich der ersten Betriebsposition höhenvariabel ausgebildet ist.

Die eingangs gestellte Aufgabe wird ebenfalls durch ein landwirtschaftliches Arbeitsgerät gelöst, welches als selbstfahrendes oder gezogenes Arbeitsgerät ausgebildet ist und wenigstens eine vor- oder nachbeschriebene erfindungsgemäße Bodenbearbeitungseinheit mit den jeweiligen Vorteilen aufweist.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand in einer perspektivischen Darstellung,
- Fig. 2: den Gegenstand nach Fig. 1 in einer Seitenansicht und einer ersten Betriebsstellung,
- Fig. 3: den Gegenstand nach Fig. 2 in einer weiteren Betriebsstellung,
- Fig. 4: den Gegenstand nach Fig. 2 in einer weiteren Betriebsstellung,
- Fig. 5: den Gegenstand nach Fig. 2 in einer aufgeschnittenen Ansicht,
- Fig. 6: den Gegenstand nach Fig. 3 in einer aufgeschnittenen Ansicht,
- Fig. 7: den Gegenstand nach Fig. 4 in einer aufgeschnittenen Ansicht.
- Fig. 8:: einen weiteren erfindungsgemäßen Gegenstand in einer auf die Lenker reduzierten Darstellung,
- Fig. 9: ein erfindungsgemäßes landwirtschaftliches Arbeitsgerät.

Einzelne technische Merkmale der nach beschriebenen Ausführungsbeispiele können auch in Kombination mit vorbeschriebenen Ausführungsbeispielen sowie den Merkmalen der unabhängigen Ansprüche und etwaig weiterer Ansprüche zu erfindungsgemäßen Gegenständen kombiniert werden. Sofern sinnvoll, werden funktional gleichwirkende Elemente mit identischen Bezugsziffern versehen.

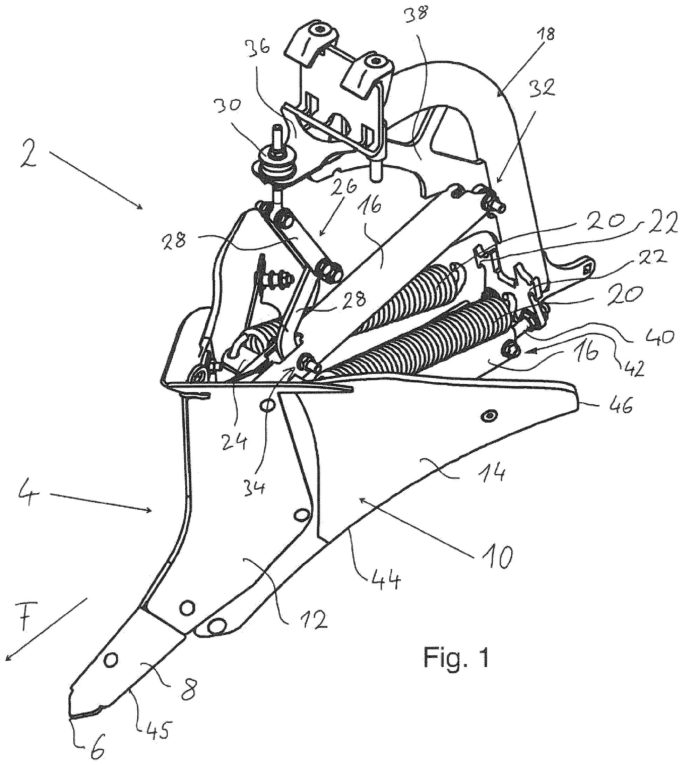

Eine erfindungsgemäße Bodenbearbeitungseinheit 2 ist vorliegend als Dammformer ausgebildet (Fig. 1). Dieser Dammformer weist ein Bodenbearbeitungselement 4 auf, welches einen eine Spitze 6 aufweisenden Frontteil 8 umfasst, an den sich bezüglich einer Fahrt bzw. Bewegungsrichtung F nach hinten Leitbereiche 10 jeweils nach links und rechts von einer Längsmittelachse wegführend anschließen. In Fig. 1 ist nur der in Fahrtrichtung F linke Leitbereich 10 erkennbar, der durch ein erstes Leitblech 12 und ein dahinter liegendes hinteres Leitblech 14 gebildet wird. Die Leitbleche 12 und 14 sind wie auch der Frontteil 8 an einer Tragkonstruktion des Bodenbearbeitungselements 4 befestigt, die in der Figur nicht näher zu erkennen ist.

Das Bodenbearbeitungselement 4 ist über zwei Lenker 16 an einem als Gestell ausgebildeten Tragrahmen 18 angebunden. Der untere Lenker 16 kann auch durch einen Doppellenker ausgebildet werden, der synchron verschwenkt, in einer Seitenansicht quer zur Bewegungsrichtung identische Lagerpunkte bzw. Schwenkachsen aufweist und somit die auf das Bodenbearbeitungselement wirkenden und im unteren Lenker übertragenen Lasten auf seine zwei insbesondere parallel ausgebildeten Teillenker aufteilen kann. Darüber hinaus kann durch einen solchen Doppellenker die Linearführung des Bodenbearbeitungselements 4 verbessert werden. Gleiches gilt für weitere erfindungsgemäße Ausführungsbeispiele auch für den oberen Lenker 16.

Auch der obere Lenker 16 durch einen solchen Doppellenker ausgebildet werden.

Mittels zweier Vorspannelemente 20 wird eine Ausweichkraft der gegebenenfalls auf einen festen Gegenstand im Boden stoßenden Bodenbearbeitungseinheit vorgegeben. Die Ausweichkraft kann durch Austausch des oder der Vorspannelemente geändert werden. Die Vorspannelemente 20 sind gestellseitig in den Figuren nicht an den hierfür vorgesehenen Befestigungsansätzen 22 angeordnet dargestellt. Dies lediglich aus Gründen der vereinfachten Darstellung. Neben der Anbindung auf Seiten des Gestells 18 sind die Vorspannelemente 20 über einen flach ausgebildeten Ansatz 24 des oberen Lenkers 16 dicht an dessen bodenbearbeitungselementseitigen Lagerpunkt angeordnet.

Für das vorliegende Ausführungsbeispiel ist es besonders vorteilhaft, dass die Vorspannelemente 20 einenends am oberen Lenker 16 und anderenends an dem Gestell unterhalb des Lenkers 16 und insbesondere bezüglich der Höhe über einer horizontalen Ebene 50 zwischen den gestellseitigen Lagerpunkten der Lenker 16 angeordnet ist.

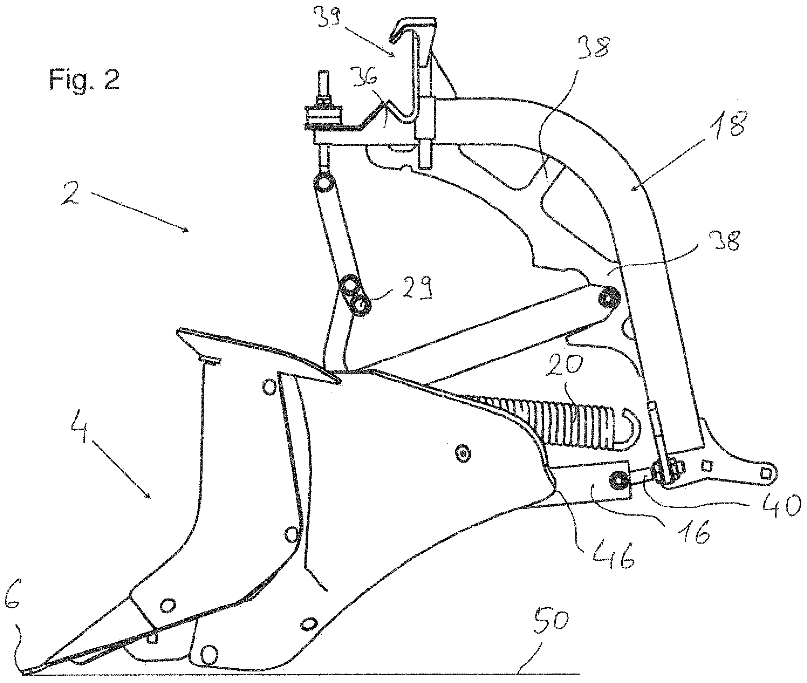

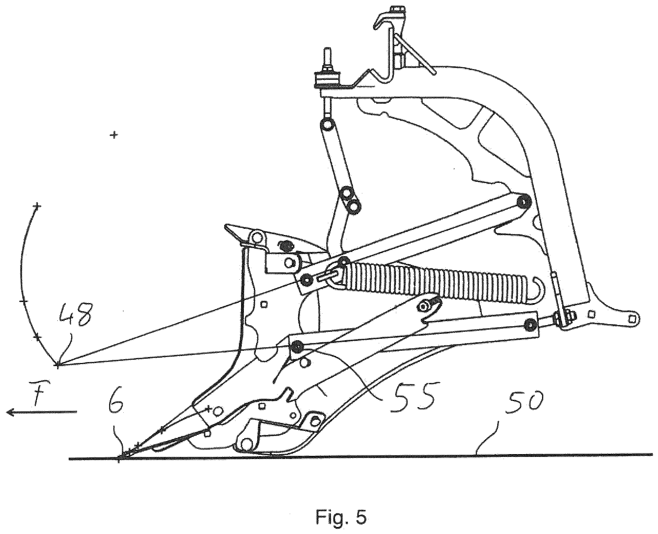

Des Weiteren ist an dem oberen Lenker 16 mit seinem einen Ende ein als Gelenkstange ausgebildetes Blockadeelement 26 angeordnet, welches anderenends am Gestell- bzw. Tragrahmen 18 gedämpft festgelegt ist. Die Gelenkstange ist aus zwei Gelenkteilen 28 gebildet, die zur Vermeidung einer Totpunktlage in einer angewinkelten Stellung zueinander gehalten werden, d.h., der obere Lenker 16 kann wie der untere Lenker 16 in der in den Fig. 2 und 5 gezeigten Darstellung nicht weiter nach unten wegschwenken, da dies ein in Fig. 1 nicht weiter dargestellter Anschlag 29 der Gelenkstange 26 verhindert (Fig. 2). Am oberen Ende ist die Gelenkstange mittels eines Dämpfungselements 30 gedämpft und gleichwohl gestellfest angebunden.

Ein gestellseitiges Lager 32 des oberen Lenkers 16 ist auf die Fahrtrichtung F bezogen hinter einem bodenbearbeitungselementseitigen Lager 34 des oberen Lenkers angeordnet. Der oberen Lenker 16 weist somit vom Tragrahmen 18 bzw. vom Gestell nach vorne, gleiches gilt für den unteren Lenker 16.

Der Tragrahmen 18 ist in einer Seitenansicht zwecks Anordnung des Bodenbearbeitungselementes in Fahrtrichtung im Wesentlichen vor und unter ihm (vgl. nachfolgende Figuren) galgenartig aufgebaut mit einem zur Anordnung der gestellseitigen Lager der Lenker 16 im Wesentlichen vertikal verlaufenden stangenartigen Teil und einen überkragenden oberen Tragrahmenbereich 36. Zusätzlich sind mehrere Streben 38 des Tragrahmens 18 zur Stabilisierung vorhanden, wobei der obere Lenker an einer dieser Streben gelagert ist.

Der Tragrahmen 18 wiederum ist mittels einer Aufnahme 39 für einen Einbau an einen Maschinenrahmen eines selbstfahrenden oder gezogenen landwirtschaftlichen Arbeitsgeräts ausgebildet.

Mittels eines als Schraubstange 40 ausgebildeten Stellmittels kann der gestellseitige Lagerpunkt 42 des unteren Lenkers 16 im Wesentlichen in Fahrtrichtung verschoben werden. Hierdurch wird eine erste Betriebsposition des Bodenbearbeitungselements 4 hinsichtlich dessen Positionierung der Spitze sowie hinsichtlich der Neigung der Leitbereiche verändert, wodurch sich insbesondere die Dammkontur einschließlich deren Höhe ändert. Die Position einer Leitbereichskante 44 und einer unteren Kante 45 des Frontteils 8 ändern sich genauso wie die Höhe der hinteren Kante 46.

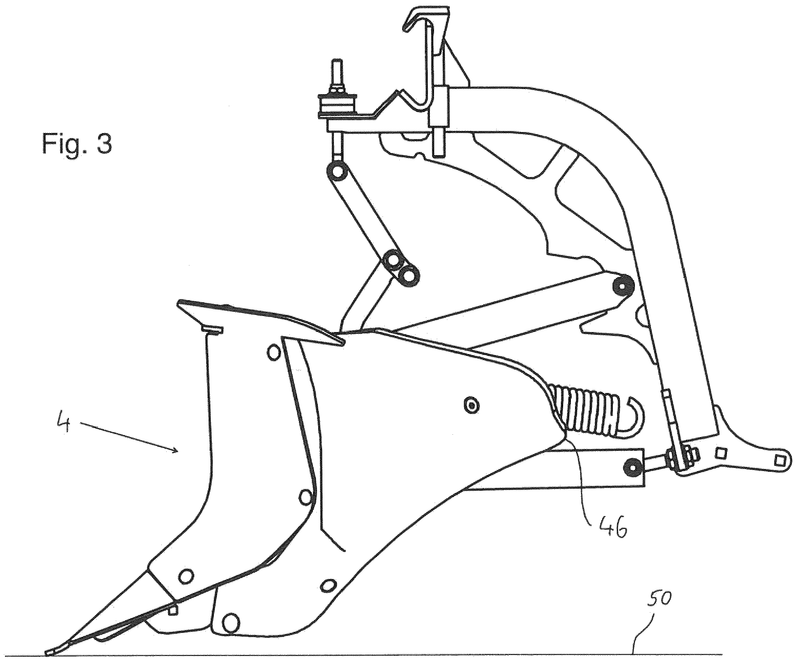

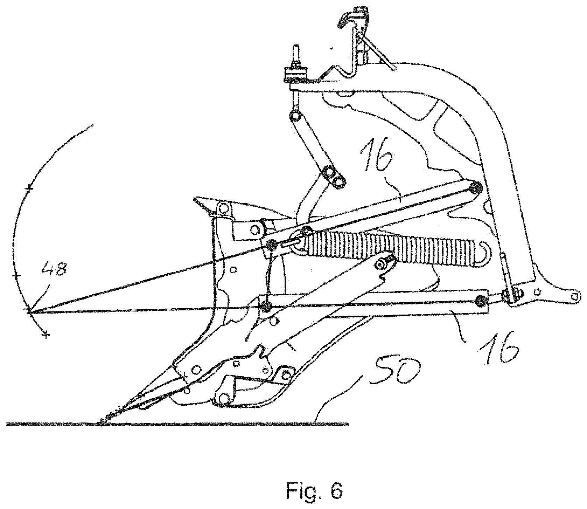

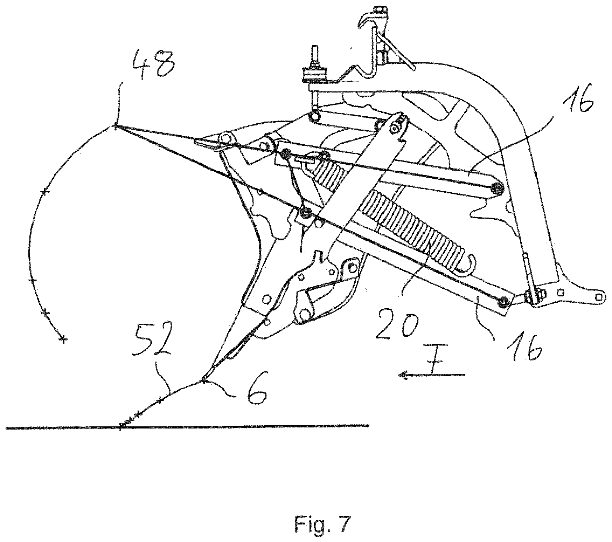

Der Vergleich der Figuren 2 bis 7 zeigt die möglichen Bewegungsabläufe des Dammformelements für einen Übergang aus einer ersten Arbeits- bzw. Betriebsposition (Fig. 2 und 5) zu einer zweiten Betriebsposition (Fig. 3 bzw. Fig. 6) hin zu einer weiteren Betriebsposition (Fig. 3 und 7), in der das Bodenbearbeitungselement 4 insbesondere Steinen während der Bodenbearbeitung ausweicht.

In der Ausgangsposition und ersten Betriebsposition der Fig. 2 ist eine Spitze 6 des Bodenbearbeitungselements 4 auf einer Höhe mit einer Horizontalen bzw. horizontalen Ebene 50, die eine Parallele zum Untergrund bzw. den Untergrund im vorliegenden Fall darstellt. Es versteht sich, dass im Falle einer ersten Betriebsposition diese Horizontale 50 zunächst im Boden verläuft. Eine hintere Kante 46 gibt im vorliegenden Fall die Höhe einer zu bildenden Dammkontur an. Nach dem der Damm gebildet ist, kann diese Horizontale 50 auch mit der Bodenoberfläche zwischen den Dämmen einhergehen.

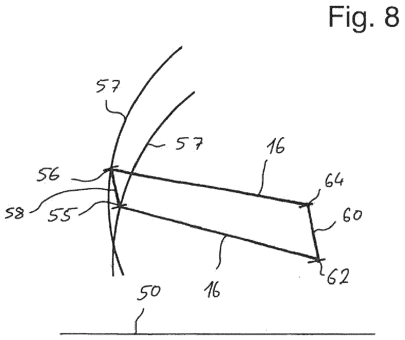

Bereits in Fig. 2 ist angedeutet sowie insbesondere in Fig. 5 deutlich erkennbar, dass der Abstand der bodenbearbeitungselementseitigen Lager deutlich kleiner ist als der Abstand der gestellseitigen Lager (vgl. auch Fig. 8). Darüber hinaus ist vorliegend der untere Lenker 16 geringfügig länger als der obere Lenker 16. Ein Abstand der Spitze 6 vom Lagerpunkt 55 bezüglich der Horizontalen 50 liegt in dem erfindungsgemäßen Bereich von -100 mm bis + 500 mm. Insbesondere die Beabstandung der beiden Lager auf Seiten des Gestells und des Bodenbearbeitungselements 4 führt dazu, dass sich eine Bewegungskurve des in Fig. 5 dargestellten Momentanpols 48 ergibt. Die Ausbildung der Lenker 16 und derer Lagerpunkte führt mit den vorliegend zwei Vorspannelementen 20 dazu, dass in einem ersten Bewegungsbereich des Bodenbearbeitungselements 4, der die in den Fig. 2 und 3 bzw. 5 und 6 gezeigten Betriebspositionen sowie dazwischen liegenden Positionen umfasst, eine annähernd konstante Ausweichkraft vorliegt. Die zur Bewegung des Bodenbearbeitungselements benötigte Kraft, vorliegend zwischen 330 kg und 380 kg und vorzugsweise 350 kg, ist in den jeweiligen Positionen in etwa gleich (+/- 10 %, bevorzugt +/- 5%). Hierbei ändert sich die Position der Spitze 6 nur unwesentlich, während sich die hintere Kante 46 hinsichtlich ihres Abstands zur Horizontalebene 50 deutlich stärker ändert. Die Kinematik ist so ausgelegt, dass sich trotz des Viergelenks im Wesentlichen eine Verschwenkung um die Spitze 6 bzw. um den dicht bei dieser liegenden Momentanpol 48 ergibt. Man kann bei vergleichsweise stark hinsichtlich deren Höhe geänderten Dammkonturen die Tiefe gleich halten. Darüber hinaus wird mit annähernd gleichen Ausweichkräften gearbeitet. Die von der Bodenbearbeitungseinheit bei identischen Böden auf das Gestell und somit auf die zugehörige landwirtschaftliche Arbeitsmaschine ausgeübten Kräfte sind daher auch bei unterschiedlich hohen Dämmen im Wesentlichen identisch, was zu deutlichen Erleichterungen für ein gesteuertes oder geregeltes Führen der Bodenbearbeitungseinheit 2 bzw. eines zugehörigen landwirtschaftlichen Arbeitsgeräts führt.

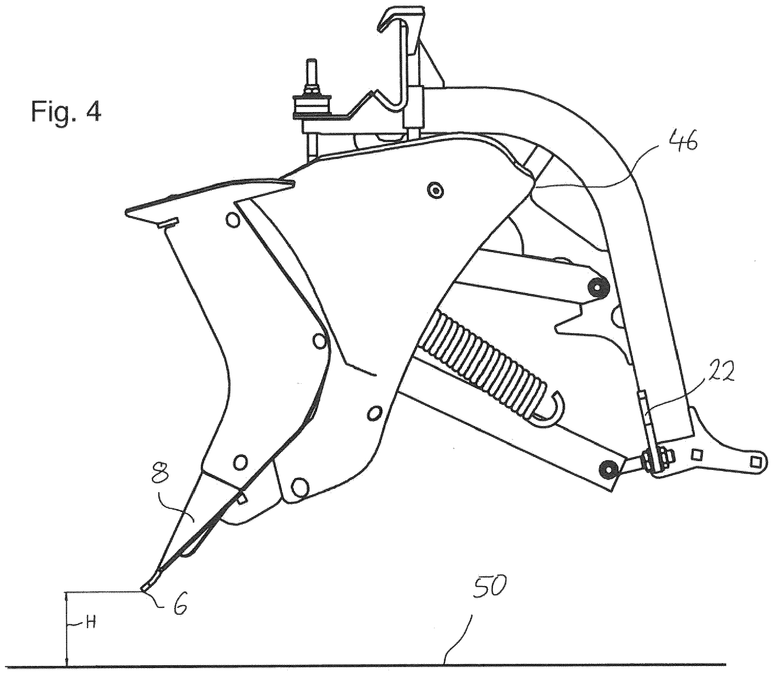

Sofern die vom Untergrund oder Boden auf das Bodenbearbeitungselement 4 ausgeübte Kraft, insbesondere aufgrund eines Hindernisses, z.B. in Form eines Steins oder Felsstücks, zu groß wird, kann das Bodenbearbeitungselement 4 aufgrund der vorhandenen Kinematik des Viergelenks in einer kombinierten Bewegung aus einer nun aber geringfügigeren Verschwenkung und einer Translation der Spitze 6 und des Bodenbearbeitungsgeräts nach schräg hinten (vgl. Fig. 5 bis 7) mit der dargestellten Bewegungslinie 52 der Spitze 6 einem Hindernis ausweichen. Dies geht einher mit einer aufgrund der nun anliegenden Winkelbeziehung zwischen dem Vorspannelement 20, dem Tragrahmen18 und dem sich durch die Anlenkung des oberen Lenkers 16 vorhandenen Hebel mit einer Reduktion der Ausweichkraft. Die Beschädigungsgefahr für die Spitze 6 des Bodenbearbeitungselements 4 ist reduziert. Ähnlich wie in den vorherigen Figuren ist auch in der Fig. 4, in der das Bodenbearbeitungselement 4 in der maximalen Ausweichposition mit einer um ca. 10 cm von der Horizontalen 50 angehobenen Spitze 6 dargestellt ist (Höhe H), das Vorspannelement 20 wiederum nicht in Kontakt mit den Befestigungsansätzen 22.

Der Übergang von der in der Fig. 5 gezeigten ersten Betriebsposition, zu der in der Fig. 6 gezeigten zweiten Betriebsposition hin zu der maximalen Auslenkposition in der Fig. 7 ergibt die in diesen Figuren gezeigte Bewegungskurve des Momentanpols 48. Dieser ergibt sich -betrachtet quer zur Fahrtrichtung F- durch zwei gerade Linien, die vom gestellseitigen Lagerpunkt eines jeweiligen Lenkers 16 ausgehen, dann durch den bodenbearbeitungselementseitigen Lagerpunkt eines jeweiligen Lenkers 16 verlaufen und sich dann in Fahrtrichtung in Fahrtrichtung F weiter vorne schneiden. Die Bewegungskurve des Momentanpols ergibt somit eine vor dem Bodenbearbeitungselement liegende, nach hinten offene Kurve.

In Fig. 8 sind die beiden Lenker sowie die horizontale Ebene 50 eingezeichnet zuzüglich der Darstellung der von den Lenkern überstrichenen Kreissegmente 57. Die beiden Lenker 16 sind dergestalt gelagert, dass ausgehend von einer ersten Betriebsposition durch die Verschwenkung der beiden Lenker 16 und die Bewegung der beiden bodenbearbeitungselementseitigen Lagerpunkte 55 und 56 zwei sich nach oben hin zunächst voneinander entfernende Kreissegmente 57 gebildet werden. Der Abstand der beiden bodenbearbeitungselementseitigen Lager- oder Schwenkpunkte 56 und 55 entspricht der Länge einer geraden Verbindungslinie 58 zwischen diesen. Die Länge dieser geraden Linie ist kleiner als die Länge einer geraden Linie 60, die die beiden gestellseitigen Lagerpunkte 62 und 64 verbindet.

Der bodenbearbeitungselementseitige Lagerabstand der beiden Lenker 16 bzw. Abstand der beiden Lagerpunkte 55 und 56 ist somit kleiner als der Abstand der Lager auf Seiten des Gestells. Insbesondere ist die Länge der Verbindungslinie 58 in einem Bereich von 0,4 bis 0,7-mal der Länge der Verbindungslinie 60 der beiden gestellseitigen Lagerpunkte 62 und 64. Die Lagerpunkte entsprechen der Position der Schwenkachsen der jeweiligen Lenker 16, womit die vorbeschriebenen Vorteile einhergehen.

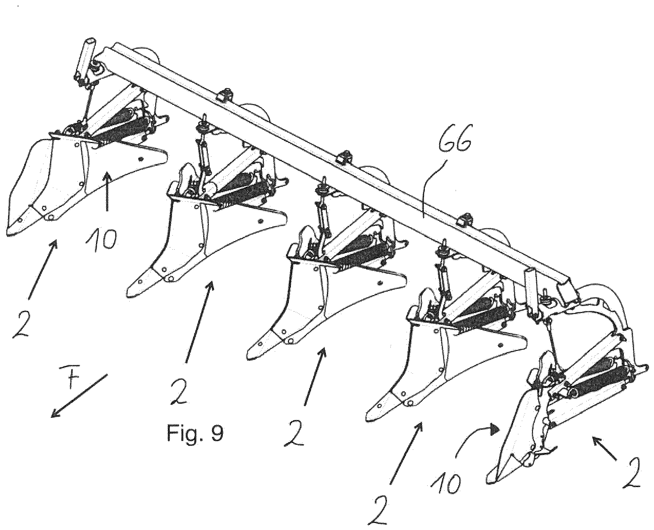

Eine Mehrzahl von erfindungsgemäßen Bodenbearbeitungseinheiten 2 ist zwecks Ausbildung eines landwirtschaftlichen Arbeitsgeräts an einem Maschinenrahmen 66 desselben angeordnet (Fig. 9). Der Maschinenrahmen 66 kann wiederum über bekannte und nicht dargestellte Verbindungsmittel direkt mit einer Dreipunktaufhängung eines Schleppers oder weiteren Maschinenrahmenelementen eines weiteren Arbeitsgeräts verbunden und von diesen getragen sein. Die beiden in der Fig. 9 in Fahrtrichtung F betrachtet äußeren Bodenbearbeitungseinheiten 2 weisen lediglich zu den innenliegenden Bodenbearbeitungseinheiten hin zur Dammformung ausgebildete Leitbereiche 10 auf.

## Patentansprüche

1. Bodenbearbeitungseinheit, insbesondere zur Dammformung, mit einem Bodenbearbeitungselement (4), das einen insbesondere eine Spitze (6) aufweisenden Frontteil (8) und wenigstens einen sich daran anschließenden seitlichen Leitbereich (10) aufweist, welches insbesondere als Dammform- oder Häufelelement ausgebildet ist, sowie mit zwei Lenkern (16) und einem als Gestell ausgebildeten Tragrahmen (18), an dem das Bodenbearbeitungselement (4) mittels der Lenker (16) gelenkig angebunden ist, **dadurch gekennzeichnet, dass** die Lenker (16) zumindest für eine Bewegung aus einer ersten Betriebsposition, in der zumindest einer der Lenker (16) und vorzugsweise beide Lenker (16) vom Gestell aus nach vorne weisen, in eine zweite Betriebsposition unterschiedlich lang ausgebildet sind.

2. Bodenbearbeitungseinheit nach Anspruch 1, **dadurch gekennzeichnet, dass** die beiden Lenker (16) dergestalt gelagert sind, dass ausgehend von der ersten Betriebsposition durch die Verschwenkung der beiden Lenker (16) und die Bewegung der bodenbearbeitungselementseitigen Lagerpunkte (55,56) zwei sich nach oben hin zunächst voneinander entfernende Kreissegmente (57) ausgebildet werden.

3. Bodenbearbeitungseinheit nach Anspruch 1 oder 2, **gekennzeichnet durch** einen Momentanpol (48), der sich betrachtet quer zur Fahrtrichtung F durch zwei gerade Linien ergibt, die vom gestellseitigen Lagerpunkt (62,64) eines jeweiligen Lenkers (16) ausgehen, dann durch den bodenbearbeitungselementseitigen Lagerpunkt (55,56) eines jeweiligen Lenkers (16) verlaufen und sich in Fahrtrichtung F weiter nach vorne schneiden.

4. Bodenbearbeitungseinheit nach einem der vorherigen Ansprüche, **dadurch gekennzeichnet, dass** der bodenbearbeitungselementseitige Lagerabstand der beiden Lenker (16) kleiner ist als der gestellseitige Lagerabstand der beiden Lenker (16) und das Verhältnis des bodenbearbeitungselementseitigen Lagerabstands zum gestellfesten Lagerabstand insbesondere in einem Bereich von 0,4 bis 0,7 liegt.

5. Bodenbearbeitungseinheit nach einem der vorherigen Ansprüche, **dadurch gekennzeichnet, dass** die Länge des oberen Lenkers (16) zu der Länge des unteren Lenkers (16) in einem Bereich von 0,8 bis 1,3, vorzugsweise von 0,9 bis 1,2 liegt.

6. Bodenbearbeitungseinheit nach einem der vorherigen Ansprüche, **dadurch gekennzeichnet, dass** ein vorderster Punkt der des Frontteils, insbesondere die Spitze (6), einen horizontalen Abstand von -100 mm bis + 500 mm zum nächsten Lagerpunkt (55) des Bodenbearbeitungselements (4) aufweist.

7. Bodenbearbeitungseinheit nach einem der vorherigen Ansprüche, **gekennzeichnet durch** zumindest ein Vorspannelement (20), welches insbesondere einenends gestellfest und anderenends an einem Lenker (16) oder auf Seiten des Bodenbearbeitungselements (4) angeordnet ist.

8. Bodenbearbeitungseinheit nach Anspruch 7, **dadurch gekennzeichnet, dass** das Vorspannelement (20) einenends an einem oberen Lenker (16) und anderenends an dem Gestell unterhalb des Lenkers (16) und insbesondere bezüglich der Höhe über einer horizontalen Ebene (50) zwischen den gestellseitigen Lagerpunkten (62,64) der Lenker (16) angeordnet ist.

9. Bodenbearbeitungseinheit nach einem der vorherigen Ansprüche, **dadurch gekennzeichnet, dass** die Lenker (16) dergestalt am Bodenbearbeitungselement (4) angeordnet sind, dass dieses im Betriebsfall eine erste Bewegungsphase mit im Wesentlichen einer Verschwenkung aus der ersten Betriebsposition mit nur geringfügigem Höhenversatz der Spitze (6), wobei quer zur Bewegungsrichtung betrachtet eine Bewegung eines in Fahrtrichtung nach hinten weisenden Endes des Bodenbearbeitungselements eine deutlich größere Strecke überstreicht als das in Fahrtrichtung vordere bzw. entgegengesetzte Ende des Bodenbearbeitungselements, und eine anschließende zweite Bewegungsphase mit im Wesentlichen einer Translation des gesamten Bearbeitungselements aufweist.

10. Bodenbearbeitungseinheit nach Anspruch 9, **dadurch gekennzeichnet, dass** in der ersten Bewegungsphase die Ausweichkraft im Wesentlichen identisch bleibt.

11. Bodenbearbeitungseinheit nach Anspruch 9 oder 10, **dadurch gekennzeichnet, dass** das die Ausweichkraft in der zweiten Bewegungsphase mit zunehmender Auslenkung der Lenker (16) abnimmt.

12. Bodenbearbeitungseinheit nach einem der vorherigen Ansprüche, **gekennzeichnet durch** ein Blockadeelement (26), welches einenends an einem der Lenker (16) und/oder an dem Bodenbearbeitungselement (4) und anderenends am Gestell und insbesondere bezüglich der Höhe oberhalb der Lenker (16) am Tragrahmen (18) angeordnet ist, wobei eine Bewegung in eine Richtung nach unten begrenzt und in eine Richtung nach oben erlaubt ist.

13. Bodenbearbeitungseinheit nach einem der vorherigen Ansprüche, **dadurch gekennzeichnet, dass** wenigstens eines der gestell- oder bodenbearbeitungselementseitigen Lager (32,34,42) durch ein Stellmittel (40) lageveränderlich ist.

14. Bodenbearbeitungseinheit nach Anspruch 13, **dadurch gekennzeichnet, dass** eine rückwärtige, obere Kante (46) des Leitbleichbereichs durch die Verstellung des Lagers (42) bezüglich der ersten Betriebsposition höhenvariabel ausgebildet ist.

15. Landwirtschaftliches Arbeitsgerät, welches als selbstfahrendes oder gezogenes Arbeitsgerät ausgebildet ist, **gekennzeichnet durch** wenigstens eine Bodenbearbeitungseinheit (2) nach einem der vorherigen Ansprüche.

## Claims

1. Soil-working unit, in particular for dam formation, having a soil-working element (4) which has a front part (8), with in particular a tip (6), and has at least one adjoining lateral guide region (10), which is in particular in the form of a dam-forming or ridging element, and having two links (16) and a carrying frame (18) which is in the form of a framework and to which the soil-working element (4) is attached in a articulated manner by means of the links (16), **characterized in that** the links (16) are configured to be of different lengths at least for a movement from the first operating position, in which at least one of the links (16) and preferably both links (16) point forwards from the framework, into a second operating position.

2. Soil-working unit according to Claim 1, **characterized in that** the two links (16) are mounted in such a way that, proceeding from the first operating position, two circular segments (57) initially diverging in an upward direction are formed by way of the pivoting of the two links (16) and of the movement of the soil-working-element-side bearing points (55, 56).

3. Soil-working unit according to Claim 1 or 2, **characterized by** an instantaneous centre of rotation (48) which, when viewed transversely to the direction of travel F, is determined by two straight lines departing from the framework-side bearing point (62, 64) of a respective link (16) and then extending through the soil-working-element-side bearing point (55, 56) of a respective link (16) and intersecting further forwards in the direction of travel F.

4. Soil-working unit according to one of the preceding claims, **characterized in that** the soil-working-element-side distance between bearings of the two links (16) is smaller than the framework-side distance between bearings of the two links (16), and the ratio of the soil-working-element-side distance between bearings to the distance between bearings fixed in relation to the framework lies in particular in a range from 0.4 to 0.7.

5. Soil-working unit according to one of the preceding claims, **characterized in that** the length of the upper link (16) in relation to the length of the lower link (16) lies in a range from 0.8 to 1.3, preferably from 0.9 to 1.2.

6. Soil-working unit according to one of the preceding claims, **characterized in that** a frontmost point of the front part, in particular the tip (6), is at a horizontal distance of -100 mm to +500 mm from the nearest bearing point (55) of the soil-working element (4).

7. Soil-working unit according to one of the preceding claims, **characterized by** at least one preload element (20) which, in particular, is arranged so as to be fixed in relation to the framework at one end and is arranged on a link (16), or on the side of the soil-working element (4), at the other end.

8. Soil-working unit according to Claim 7, **characterized in that** the preload element (20) is arranged on an upper link (16) at one end and on the framework below the link (16), and in particular in terms of height above a horizontal plane (50) between the framework-side bearing points (62, 64) of the links (16), at the other end.

9. Soil-working unit according to one of the preceding claims, **characterized in that** the links (16) are arranged on the soil-working-element (4) in such a way that the latter, in the case of operation, has a first movement phase, comprising substantially a pivoting from the first operating position, with only a slight height offset of the tip (6), wherein, when viewed transversely to the movement direction, a movement of an end of the soil-working-element that points rearwards in the direction of travel covers a significantly greater distance than the front or opposite end of the soil-working-element in the direction of travel, and a subsequent second movement phase, comprising substantially a translation of the entire working element.

10. Soil-working unit according to Claim 9, **characterized in that**, in the first movement phase, the yielding force remains substantially identical.

11. Soil-working unit according to Claim 9 or 10, **characterized in that**, in the second movement phase, the yielding force decreases with increasing deflection of the links (16).

12. Soil-working unit according to one of the preceding claims, **characterized by** a blockage element (26) which is arranged on one of the links (16), and/or on the soil-working-element (4), at one end and on the framework, and in particular in terms of height on the carrying frame (18) above the links (16), at the other end, wherein a movement in a downward direction is limited and in an upward direction is permitted.

13. Soil-working unit according to one of the preceding claims, **characterized in that** at least one of the framework-side or soil-working-element-side bearings (32, 34, 42) is variable in terms of position by way of an adjustment means (40).

14. Soil-working unit according to Claim 13, **characterized in that** a rear upper edge (46) of the guide-plate region is configured to be variable in terms of height in relation to the first operating position by way of adjustment of the bearing (42).

15. Agricultural implement configured as a self-driving or towed implement, **characterized by** at least one soil-working unit (2) according to one of the preceding claims.

## Revendications

1. Unité de traitement de sol, destinée en particulier à la formation de remblais, ladite unité comprenant un élément de traitement de sol (4) qui comporte une partie avant (8), pourvue en particulier d'une pointe (6), et au moins une zone de direction latérale adjacente (10) qui est conçue notamment comme un élément d'amoncellement ou de formation de remblais, et comprenant également deux bielles (16) et un cadre de support (18), conçu comme un châssis, auquel l'élément de traitement de sol (4) est relié de manière articulée au moyen des bielles (16), **caractérisée en ce que** les bielles (16) sont conçues avec des longueurs différentes au moins pour se déplacer d'une première position de fonctionnement, dans laquelle au moins une des bielles (16) et de préférence les deux bielles (16) pointent depuis le cadre vers l'avant, jusque dans une deuxième position de fonctionnement.

2. Unité de traitement de sol selon la revendication 1, **caractérisée en ce que** les deux bielles (16) sont montées de manière à ce que, à partir de la première position de fonctionnement, deux segments de cercle (57), qui s'éloignent tout d'abord l'un de l'autre vers le haut, soient formés par pivotement des deux bielles (16) et déplacement des points d'appui (55, 56) du côté de l'élément de traitement de sol.

3. Unité de traitement de sol selon la revendication 1 ou 2, **caractérisée par** un centre instantané de rotation (48) qui, lorsque l'on observe transversalement à la direction de déplacement F, résulte de deux lignes droites qui partent du point d'appui (62, 64), côté châssis, d'une bielle respective (16), puis qui passent par le point d'appui (55, 56), côté élément de traitement de sol, d'une bielle respective (16), et se coupent plus vers l'avant dans la direction de déplacement F.

4. Unité de traitement de sol selon l'une des revendications précédentes, **caractérisée en ce que** la distance d'appui, côté élément de traitement de sol, des deux bielles (16) est inférieure à la distance d'appui, côté châssis, des deux bielles (16) et le rapport de la distance d'appui côté élément de traitement de sol à la distance d'appui fixée au châssis est notamment dans la gamme allant de 0,4 à 0,7.

5. Unité de traitement de sol selon l'une des revendications précédentes, **caractérisée en ce que** le rapport de la longueur de la bielle supérieure (16) à la longueur de la bielle inférieure (16) est dans une gamme allant de 0,8 à 1,3, de préférence de 0,9 à 1, 2.

6. Unité de traitement de sol selon l'une des revendications précédentes, **caractérisée en ce que** le point le plus en avant de la partie avant, notamment la pointe (6), est à une distance horizontale de -100 mm à +500 mm du point d'appui suivant (55) de l'élément de traitement de sol (4).

7. Unité de traitement de sol selon l'une des revendications précédentes, **caractérisée par** au moins un élément de précontrainte (20) qui est fixé notamment à une extrémité au châssis et qui est disposé à l'autre extrémité sur une bielle (16) ou du côté de l'élément de traitement de sol (4).

8. Unité de traitement de sol selon la revendication 7, **caractérisée en ce que** l'élément de précontrainte (20) est disposé à une extrémité sur une bielle supérieure (16) et à l'autre extrémité sur le châssis au-dessous de la bielle (16) et notamment en ce qui concerne la hauteur au-dessus d'un plan horizontal (50) entre les points d'appui (62, 64), côté châssis, de la bielle (16).

9. Unité de traitement de sol selon l'une des revendications précédentes, **caractérisée en ce que** les bielles (16) sont disposées sur l'élément de traitement de sol (4) de manière à ce que, pendant le fonctionnement, celui-ci présente une première phase de déplacement comprenant sensiblement un mouvement de pivotement depuis la première position de fonctionnement avec seulement un léger décalage en hauteur de la pointe (6), lorsque l'on observe transversalement à la direction de déplacement, un déplacement d'une extrémité de l'élément de traitement de sol dirigé vers l'arrière dans la direction du déplacement couvrant une distance significativement plus grande que l'extrémité, avant ou opposée dans la direction de déplacement, de l'élément de traitement de sol et présentant une deuxième phase de déplacement suivante comprenant sensiblement une translation de tout l'élément de traitement.

10. Unité de traitement de sol selon la revendication 9, **caractérisée en ce que**, dans la première phase de déplacement, la force de déport reste sensiblement identique.

11. Unité de traitement de sol selon la revendication 9 ou 10, **caractérisée en ce que** la force de déport dans la deuxième phase de déplacement diminue à mesure que la déviation de la bielle (16) augmente.

12. Unité de traitement de sol selon l'une des revendications précédentes, **caractérisée par** un élément de blocage (26) qui est disposé à une extrémité sur l'une des bielles (16) et/ou sur l'élément de traitement de sol (4) et à l'autre extrémité sur le châssis et notamment en ce qui concerne la hauteur au dessus de la bielle (16), sur le cadre de support (18), le déplacement étant limité vers le bas et autorisé vers le haut.

13. Unité de traitement de sol selon l'une des revendications précédentes, **caractérisée en ce qu'**au moins un des paliers (32, 34, 42) côté châssis ou côté élément de traitement de sol est modifiable en position par un moyen de réglage (40).

14. Unité de traitement de sol selon la revendication 13, **caractérisée en ce qu'**un bord supérieur arrière (46) de la zone de tôle de direction est conçu pour être variable en hauteur par réglage du palier (42) en ce qui concerne la première position de fonctionnement.

15. Outil de travail agricole conçu comme un outil de travail automoteur ou tracté, **caractérisé par** au moins une unité de traitement de sol (2) selon l'une des revendications précédentes.
